# EUROPEAN PATENT SPECIFICATION

(11) **EP 4 463 412 B1**
(45) Date of publication and mention of the grant of the patent: **10.12.2025**
(21) Application number: 23700739.8
(22) Date of filing: 11.01.2023
(51) Int. Cl.: B66C 23/18, B66C 23/52, F03D 13/10, F03D 13/25

(54) **CRANE AND METHOD FOR HANDLING OF ONE OR MORE WIND TURBINE COMPONENTS**
KRAN UND VERFAHREN ZUR HANDHABUNG EINER ODER MEHRERER WINDTURBINENKOMPONENTEN
GRUE ET PROCÉDÉ DE MANIPULATION D'UN OU PLUSIEURS ÉLÉMENTS D'ÉOLIENNE

(30) Priority: 14.01.2022 NL 2030555
(43) Date of publication of application: 20.11.2024
(73) Proprietor: Itrec B.V., 3115 HH Schiedam (NL)
(72) Inventor: ROODENBURG, Joop, 3115 HH SCHIEDAM (NL); NOUWENS, Ronny Lambertus Waltherus, 3115 HH SCHIEDAM (NL)
(74) Representative: EP&C
(86) International application number: PCT/EP2023/050539
(87) International publication number: WO 2023/135167

(56) References cited:
- WO-A1-2018/208158
- WO-A1-2021/130254
- WO-A1-2021/204938
- US-A1- 2012 241 404

## Description

The present invention relates to a crane, in particular an offshore leg encircling crane for use on a jack up-vessel, and a method for handling of one or more wind turbine components, e.g. for installation and/or maintenance of an offshore wind turbine wherein use is made of such a crane and/or a jack-up vessel provided with an offshore leg encircling crane.

The crane of the invention is in particular suitable for use in handling of one or more wind turbine components, e.g. the nacelle and/or one or more components that are housed in a nacelle and/or mounted on the nacelle, e.g. gearbox, generator, hub and/or blades, of an offshore wind turbine, e.g. for installation and/or maintenance of an offshore wind turbine. In the field of offshore wind turbines the need exists for the handling by a tall crane of components "at the height of the nacelle", which includes for example the handling of the nacelle itself, and/or one or more components that are housed in a nacelle and/or mounted on the nacelle, e.g. gearbox, generator, hub and/or blades, of an offshore wind turbine. Current designs of offshore wind turbines propose or already have the nacelle at a height of more than 100 meters above sea level, e.g. at 120 meters or more. Therefore the handling of such components requires a very tall crane. Also the mass of such components can be significant, in the range of 5 - 150 tons, with components like the generator and gearbox being in the upper portion of this range.

In a common approach, a jack-up vessel is positioned close to the wind turbine and then the legs are extended and the vessel is lifted, at least in part but mostly entirely, to provide a stabilized situation for the crane operation. It is noted that the invention is primarily envisaged for the offshore wind turbine field, so for maintenance, installation and/or decommission of wind turbines. However the invention may also be of use in other offshore applications, like oil & gas related jobs, civil engineering operations, etc.

The invention relates to a crane, in particular an offshore leg encircling crane according to the preamble of claim 1.

Such a crane, in particular an offshore leg encircling crane is commercially available from the applicant. A particular embodiment of a boom of such a crane is described in WO2018208158. This document discloses the preamble of claim 1.

It has been observed that with the increasing dimensions of wind turbines and hence of the cranes and vessels, luffing of the crane is not always satisfactory, in particular problems may occur relating to alignment, friction, abrasion, kinking, the luffing cable 'jumping out' the luffing cable sheave etc. etc. For example, the width of the head structure of the boom is relatively small compared to the width of the boom at the boom connector. With an increased boom length it is desired to keep the head structure relatively small. The width of the boom at the boom connector may increase in embodiments with an offshore leg encircling crane, when jack-up legs of increased dimensions are being used.

A more satisfactory operation of the crane is achieved according to the invention as defined in the independent claims.

The movable mounting of the luffing cable sheave sets allows proper guidance of the luffing cable over a range of relative positions of the luffing cable with respect to the gantry frame. The configuration of the invention assists in preventing the above-indicated problems.

It is advantageous to provide a swivelling motion of the luffing cable sheave about respective first swivel axes 1VS having a vertical component, preferably extending perpendicular to the luffing direction LD. The luffing direction is the direction in which the variable length luffing system, such as luffing wires, extends from the first left-hand and right-hand luffing cable sheave sets at the top of the luffing frame structure to the second left-hand and right-hand luffing cable sheave sets at the head structure. Such swivelling motions are advantageous in embodiments with relatively elongated booms, and/ or when the head structure is relatively small with respect to the width of the jack-up leg. In embodiments, the luffing cable sheave is positioned at an angle wherein the horizontal sheave rotation axis includes an angle of 5-25° with the horizontal boom pivot axis.

It is conceivable that the top of the luffing frame structure defines left-hand and right-hand first vertical or essentially vertical swivel axes about which a first left-hand and right-hand bracket is allowed to swivel, and wherein the first left-hand and right-hand luffing cable sheave sets are mounted to the ends of these first left-hand and right-hand brackets.

In embodiments, the second luffing cable sheave sets are also mounted movable to the head structure, allowing a swivelling motion of the second luffing cable sheave sets about respective second swivel axes having a vertical component, preferably extending perpendicular to the luffing direction.

Advantageously, an additional horizontal swivelling motion of the first luffing cable sheave sets about a first essentially horizontal swivel axis, parallel to the boom pivot axis, is possible. Preferably, also the second luffing cable sheave sets are allowed to swivel about a second essentially horizontal swivel axis. The swivelling motion of the luffing cable sheave about a horizontal swivel axis, preferably extending essentially parallel to the horizontal boom pivot axis, is in particular advantageous during luffing of an elongated boom with respect to a relatively short luffing frame structure , when the angle included by the boom and the luffing frame structure varies between 90° in the essentially horizontal position of the boom and less than 45°, preferably less than 30° in the upright position of the boom.

In embodiments, a third additional swivelling motion of the luffing cable sheave is possible about a second horizontal swivel axis perpendicular to and through the horizontal sheave rotation axis.

In embodiments, the top of the luffing frame structure defines first left-hand and right-hand horizontal swivel axes about which a first left-hand and right-hand bracket is allowed to swivel up and down, and wherein each bracket defines a first swivel axis perpendicular to the luffing direction, and wherein a first left-hand arm comprising the first left-hand luffing cable sheave sets and a first right-hand sheave arm comprising the first right-hand luffing cable sheave sets are supported by the first left-hand and right-hand bracket, respectively, and are rotatable about the respective first swivel axes.

In embodiments, the top of the head structure defines second left-hand and right-hand horizontal swivel axes about which a second left-hand and right-hand bracket is allowed to swivel up and down, and wherein each bracket defines a second swivel axis perpendicular to the luffing direction, and wherein a second left-hand arm comprising the second left-hand luffing cable sheave sets and a second right-hand sheave arm comprising the second right-hand luffing cable sheave sets are supported by the second left-hand and right-hand bracket, respectively, and are rotatable about the respective second swivel axes.

The offshore leg encircling crane is provided for use on a jack-up vessel. Such vessels are known comprising 3-6 legs, but more legs are also conceivable. The length of such a jack-up leg is e.g. in the order of 75-125 meters. The crane is in particular suitable for use in the handling of one or more offshore wind turbine components, e.g. for installation and/or maintenance of an offshore wind turbine, blades, nacelle etc. etc.

A base structure of the crane is adapted to be mounted to, or formed integral with, the vessel, and configured to extend about one of the jack-up legs of the jack-up vessel.

The leg encircling crane comprises a revolving superstructure with a crane housing or slew platform. The crane housing is also configured to extend about the jack-up leg to allow for a slew motion of the revolving superstructure relative to the base structure around a vertical slew axis via a slew bearing. The slew bearing is provided between the base structure and the crane housing, and is known per se.

The revolving superstructure furthermore comprises a luffing frame structure onto the crane housing. Such a luffing frame structure extends in a vertical direction, and is sometimes referred to as gantry frame structure. The height of the luffing frame structure is e.g. 75-125 meters above the crane housing. Luffing frame structures are known having two supporting leg structures connected to the crane housing at opposite sides of the jack-up leg, and a higher-level connector between the supporting leg structures, extending aside of the jack-up leg. The supporting leg structures of the luffing frame structure may have a triangular shape, commonly an asymmetrical orthogonal triangle with the hypotenuse sloping from the higher-level connector to the crane housing adjacent the jack-up leg, in the vicinity of the boom connectors. Commonly, the higher-level connector of the luffing frame structure is at an opposite side of the jack-up leg than the boom. For constructional stiffness including buckling prevention, further lower-level connectors are also conceivable between the supporting leg structures of the luffing frame structure.

In embodiments, a boom stop is provided at the luffing frame structure extending at a height above the crane housing in a substantially horizontal direction. Such a boom stop is provided to stop a further pivoting motion of the boom towards the luffing frame structure. In general, the boom is allowed to pivot between the essentially horizontal position of the boom and an upright position of the boom. The maximum operational boom angle is e.g. 75-90°, in particular 80-89°. An angle of 90° or more is to be avoided to prevent the boom from moving to the opposite direction. The horizontal position of the boom is in embodiments a parking position. The minimum operational boom angle is e.g. 0-25°, in particular 10-20°.

The leg encircling crane comprises a boom having a longitudinal axis. The length of a boom e.g. is between 80-200 meters. The swivelling motion of the invention is in particular advantageous for cranes wherein the width of the head structure of the boom is relatively small compared to the width of the boom at the boom connector. The width of the boom at the boom connector may in particular increase in embodiments with an offshore leg encircling crane, when jack-up legs of increased dimensions are being used. The swivelling motion is also advantageous when the length of the boom exceeds the height of the luffing frame structure significantly, e.g. 1,5 times or more. For example, the height of the luffing frame structure is about 100 meters, and the length of the boom 150-200 meters. The boom has a head structure on a distal portion, and a proximal end portion pivotally connected to the crane housing via the boom connector. This connection enables the boom to pivot up and down about the boom pivot axis perpendicular to the longitudinal axis of the boom, between an essentially horizontal position of the boom and an upright position of the boom. In the upright position the angle included by the boom and the vertical is preferably less than 30°.

In embodiments, the crane housing comprises a left-hand boom connector and a right-hand hand boom connector at a distance of each other, together defining a horizontal boom pivot axis. The distal portion of the boom is formed integral via a joint structure with a right-hand boom leg and a left-hand boom leg of equal length, each of said boom legs having a proximal end portion pivotally connected to the crane housing via the left-hand boom connector and the right-hand boom hand connector, respectively.

In embodiments, the left-hand boom leg and the right-hand boom leg converge towards each other in the direction of the joint structure, forming a clearance therebetween of an essentially triangular shape seen in a plane defined by the substantially horizontal boom pivot axis and the longitudinal axis of the boom. Preferably, each of the two boom legs comprises a hollow box structure, preferably a latticed hollow box structure, with a top and bottom face and an outer and an inner side face.

Advantageously, the distal portion is over at least a major portion of the length thereof, e.g. over at least 75% thereof, embodied as a hollow box structure, e.g. a rectangular cross section hollow box structure, preferably a latticed hollow box structure. Preferably, the distal portion has a top face, a bottom face and opposed side faces, wherein at the joint structure the outer side faces of the boom legs of the proximal portion are aligned with the side faces of the distal leg. Optionally, the side faces of the single distal portion taper towards each other from the joint structure towards a tip end and extend in the longitudinal direction of the boom.

Such a boom as described above having boom legs converging to a joint structure and a distal portion, wherein the ratio between the proximal boom legs and the distal portion is between 1 : 1 and 2 : 1 is known in the market as a lambda-boom.

In embodiments wherein the distal portion does not converge, the head structure is advantageously a travelling head structure which is slidable along a part of the distal portion from a tip end to a second position and wherein in a horizontal rest position of the boom and in the second position of the travelling head structure the main hoist block assembly is positioned above a deck of the vessel.

In embodiments, the boom is provided with a hoist cable retention device proximal of the head structure on the boom, such that the hoisting cable comprises one or more first suspension cable parts extending between the load and the cable sheave assembly at the head structure, and one or more second suspension cable parts extending between the load and the hoist cable retention device.

The leg encircling crane further has a hoisting system for hoisting a load, comprising a hoisting winch provided at the revolving superstructure and an associated hoisting cable extending from the hoisting winch to a cable sheave assembly at the head structure of the boom. In embodiments, further an auxiliary and/ or whip hoist system is provided, comprising an additional auxiliary and/ or whip hoist sheave assembly at the boom head structure, and an additional auxiliary and/ or whip hoist winch at the revolving superstructure.

The leg encircling crane further comprises a luffing device for pivoting the boom up to the upright position and down to an essentially horizontal position. The luffing device comprises a luffing winch provided at the revolving superstructure and a variable length luffing system including a luffing cable. First left-hand and right-hand luffing cable sheave sets are provided at opposite sides of the jack-up leg at the top of the luffing frame structure. Second left-hand and right-hand luffing cable sheave sets are provided at opposite sides of the head structure.

The variable length luffing system extends from the luffing winch via the left-hand and right-hand luffing cable sheave sets to extend at opposite sides of the jack-up leg in a luffing direction to the second left-hand and right-hand luffing cable sheave sets.

In the art, it is known two provide left-hand and right-hand luffing cable sheave sets, which may each having 14-30 sheaves. Accordingly, the luffing device comprises 14-30 falls between the top of the luffing frame structure and the distal portion of the boom. These left-hand and right-hand cable falls converge from the luffing frame structure towards the distal portion of the boom. In this convergence, the clearance between the jack-up leg and the luffing cables is at least 1 meter. The left-hand and right-hand luffing cable sheave sets to extend at opposite sides of the jack-up leg and hence they are separated more than the width of the jack-up leg, which in embodiments is over 20 meters. In embodiments, the left-hand and right-hand cable falls are separated less than 5 meters, e.g. less than 2 meters at the distal portion of the leg.

In embodiments, the crane boom is provided with a tagline system for controlling the load that is lifted by the crane, e.g. a wind turbine component, e.g. a wind turbine rotor blade in horizontal orientation, the tagline system comprising a tagline which in use extends from a tagline winch via a travelling block to the load. Possibly, the tagline system comprises rails provided along the boom along which the travelling block travels. It is also conceivable that the tagline system comprises a guide wire assembly with a guide wire extending along the boom along which the travelling block travels.

The disclosure also relates to a crane, for example for use in the handling of one or more wind turbine components, e.g. for installation and/or maintenance of a wind turbine, comprising:
- a base structure;
- a revolving superstructure comprising:
   ∘ a crane housing configured to allow a slew motion of the revolving superstructure relative to the base structure around a vertical slew axis via a slew bearing, the crane housing comprising a boom connector defining a horizontal boom pivot axis;
   ∘ a luffing frame structure onto the crane housing;
- a boom having a longitudinal axis, wherein the boom has a head structure on a distal portion and a proximal end portion pivotally connected to the crane housing via the boom connector, so that the boom is pivotal up and down about the boom pivot axis perpendicular to the longitudinal axis of the boom, between an essentially horizontal position of the boom and an upright position of the boom;
- a luffing device for pivoting the boom up to the upright position and down, comprising:
   ∘ a luffing winch provided at the revolving superstructure;
   ∘ first left-hand and right-hand luffing cable sheave sets provided at opposite sides at a top of the luffing frame structure;
   ∘ second left-hand and right-hand luffing cable sheave sets provided at opposite sides of the head structure; and
   ∘ a variable length luffing system including a luffing cable; the variable length luffing system extending from the luffing winch via the first left-hand and right-hand luffing cable sheave sets to extend in a luffing direction to the second left-hand and right-hand luffing cable sheave sets;
- a hoisting system for hoisting a load, comprising a hoisting winch provided at the revolving superstructure and an associated hoisting cable extending from the hoisting winch to a cable sheave assembly at the head structure of the boom;
characterized in that
the first luffing cable sheave sets are mounted movable to the top of the luffing frame structure , allowing a swivelling motion of the first luffing cable sheave sets about respective first swivel axes having a vertical component, preferably extending perpendicular to the luffing direction.

Hence, the inventive mounting of the luffing cable sheave sets is also foreseen at other types of cranes. Optional features described in this document in relation to a leg-encircling crane can also be applied to any crane with the inventive luffing cable sheave mounting.

In embodiments, the crane is an offshore leg encircling leg encircling crane for use on a jack-up vessel comprising jack-up legs, for example for use in the handling of one or more offshore wind turbine components, e.g. for installation and/or maintenance of an offshore wind turbine, the offshore leg encircling crane comprising:
- a base structure adapted to be mounted to, or formed integral with, the vessel, and configured to extend about one of the jack-up legs,
- a revolving superstructure comprising:
   o a crane housing configured to extend about the jack-up leg for allowing slew motion of the revolving superstructure relative to the base structure around a vertical slew axis via a slew bearing; and
- a luffing device wherein first left-hand and right-hand luffing cable sheave sets provided at opposite sides of the jack-up leg at a top of the luffing frame structure; and wherein the variable length luffing system extends from the luffing winch via the first left-hand and right-hand luffing cable sheave sets to extend at opposite sides of the jack-up leg in a luffing direction to the second left-hand and right-hand luffing cable sheave sets.

The invention is further elucidated in relation to the drawings, in which:
Fig. 1 is a cross-sectional side view of a jack-up vessel with an offshore leg encircling crane of the invention;

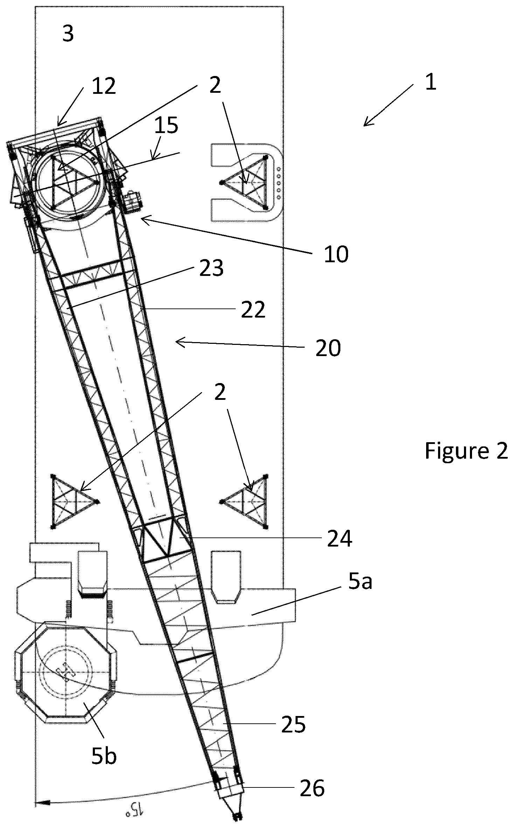

Fig. 2 is a top view of the vessel of fig. 1;
Fig. 3 shows in a side view an exemplary configuration of a top of the luffing frame structure ;
Figs. 4a-4c show in a top view an exemplary configuration of alternative luffing cable sheave sets adapted to be mounted movable to the top of the luffing frame structure of fig. 3;
Fig. 5a shows in a side view three exemplary positions of luffing cable sheave sets mounted movable to the top of the luffing frame structure of fig. 3;
Figs. 5b and 5c show two exemplary positions of fig. 5a in further detail;
Figs. 6a and 6b shown in orthogonal side views exemplary configurations of a head structure;
Fig. 7 shows an exemplary routing of luffing wires.

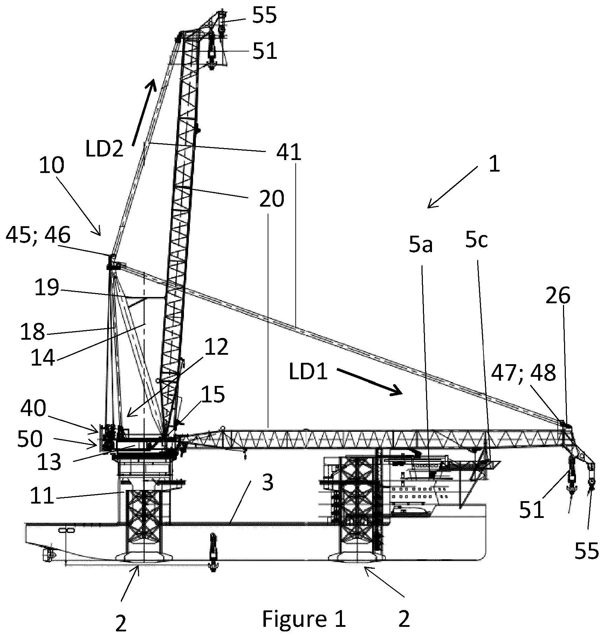

In fig. 1 a jack-up vessel 1 is shown comprising four jack-up legs 2, two of which are visible in this side view. The jack-up vessel is in particular suitable for use in the handling of one or more offshore wind turbine components, e.g. for installation and/or maintenance of an offshore wind turbine. The jack-up vessel 1 comprises a deck 3, provided with accommodation 5a, a helicopter platform 5b and a so-called boom rest 5c.

Offshore leg encircling crane 10 is provided having a base structure 11 which in the shown embodiment is formed integral with the vessel, and extends about one of the jack-up legs 2. The leg encircling crane further comprises a revolving superstructure 12 and a boom 20, shown in fig. 1 both in a horizontal parking position on the boom rest 5b and in an upright position.

The revolving superstructure 12 comprises a crane housing 13 extending about the jack-up leg 2 for allowing slew motion of the revolving superstructure 12 relative to the base structure 11 around a vertical slew axis 14 via a slew bearing. Here, the crane housing 13 comprises a left-hand boom connector and a right-hand hand boom connector at a distance of each other, together defining a horizontal boom pivot axis 15.

The revolving superstructure 12 further comprises a luffing frame structure 18 onto the crane housing 13. The luffing frame structure of this embodiment has two supporting leg structures connected to the crane housing at opposite sides of the jack-up leg 2, and a higher-level connector 18c between the supporting leg structures. The supporting leg structures 18a, 18b have in the side view of fig. 1 the shape of an orthogonal triangle. A boom stop 19 extends from the luffing frame structure 18 at a height above the crane housing 13 in a substantially horizontal direction. Such a boom stop is provided to stop a further pivoting motion of the boom towards the luffing frame structure.

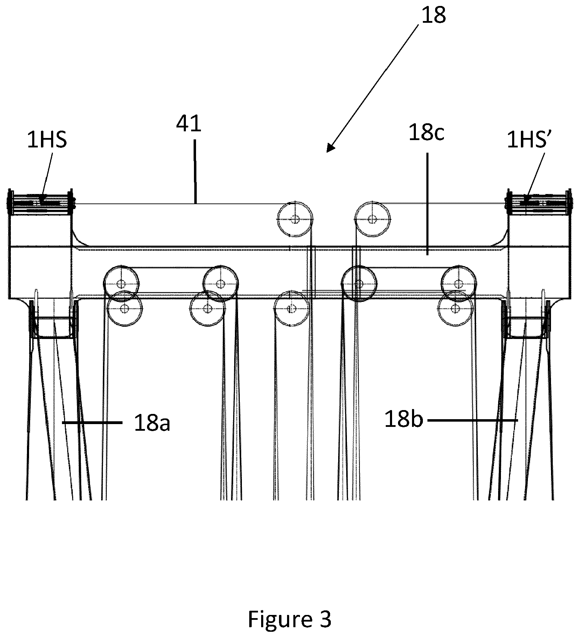

In fig. 3 the top of the luffing frame structure 18 is shown in more detail. Part of the two supporting leg structures 18a, 18b are visible, and a higher-level connector 18c between the supporting leg structures. Here, the top of the luffing frame structure defines a left-hand horizontal swivel axis 1HS and a right-hand horizontal swivel axis 1HS', both parallel to the boom pivot axis 15.

The boom 20 has a longitudinal axis, with a head structure 26 on a distal portion 25. In this embodiment, the distal portion is formed integral via a joint structure 24 with a left-hand boom leg 22 and a right-hand boom leg 23 of equal length. Each of said boom legs 22, 23 has a proximal end portion which is pivotally connected to the crane housing via a left-hand boom connector and a right-hand boom hand connector, respectively, so that the boom is pivotal up and down about the boom pivot axis 15 perpendicular to the longitudinal axis of the boom, between an essentially horizontal position of the boom and an upright position of the boom - both positions shown in fig. 1. A clearance is present between the boom legs 22, 23, and in the present embodiment an a cross beam is provided in this clearance.

The offshore leg encircling crane 10 further comprises a hoisting system for hoisting a load, comprising a hoisting winch 50 provided at the revolving superstructure 12 and an associated hoisting cable extending from the hoisting winch to a cable sheave assembly 51 at the head structure of the boom. In the shown embodiment, also an auxiliary hoisting system is provided with an auxiliary cable sheave assembly 55 at the head structure 26 of the boom.

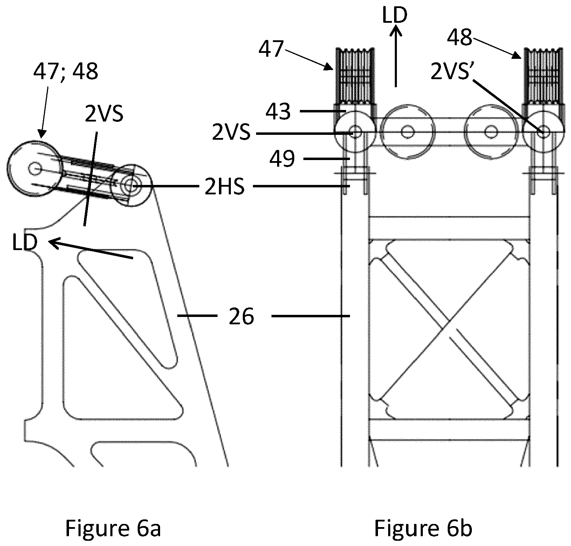

The offshore leg encircling crane 10 further comprises a luffing device for pivoting the boom 20 up to the upright position and down, comprising a luffing winch 40 provided at the revolving superstructure 12. The luffing device further comprises first left-hand and right-hand luffing cable sheave sets 45, 46 provided at opposite sides of the jack-up leg 2 at the top of the luffing frame structure 18. The luffing device further comprises second left-hand and right-hand luffing cable sheave sets 47; 48 provided at opposite sides of the head structure 26 (shown in more detail in figs. 6a and 6b).

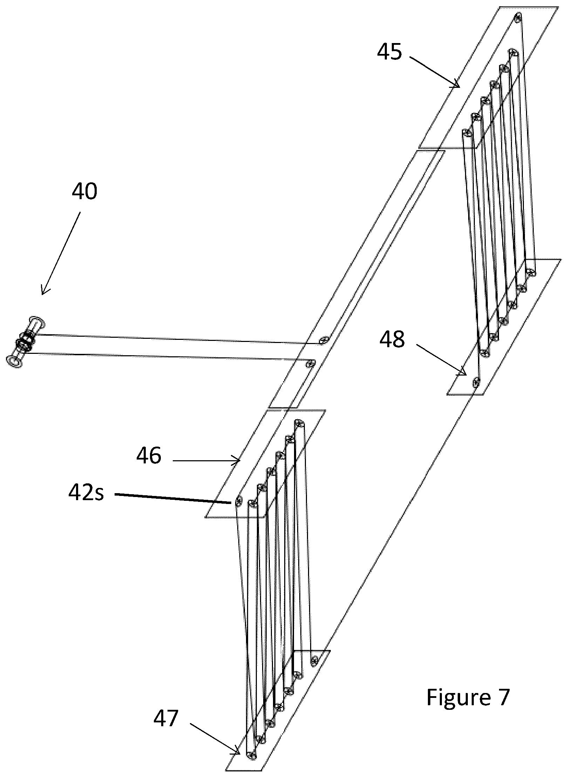

In fig. 7 an exemplary routing of a luffing wire is shown, without showing any inventive swivelling motion of the luffing cable sheaves. From this figure follows that a single luffing wire can be provided, as is preferred, that is routed from the luffing winch via the first left-hand and right-hand luffing cable sheave sets and via the second left-hand and right-hand luffing cable sheave sets at the head structure.

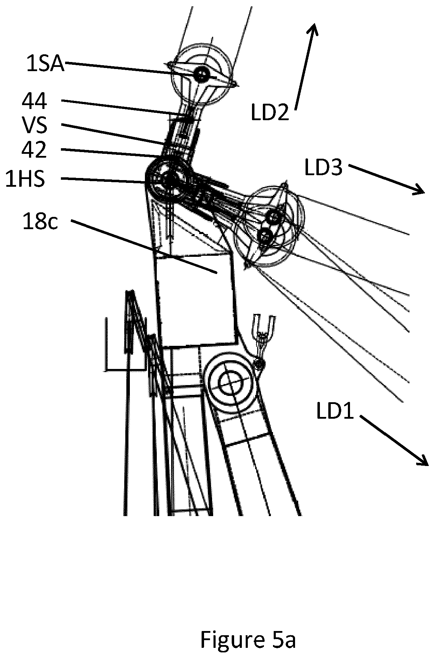

The luffing device further comprises a variable length luffing system 41 including a luffing cable. The variable length luffing system 41 extends from the luffing winch 40 to the first left-hand and right-hand luffing cable sheave sets 45; 46, to extend, e.g. at opposite sides of a jack-up leg, in a luffing direction LD to the second left-hand and right-hand luffing cable sheave sets 47; 48. The luffing direction LD is between 10-140°, in particular between 20-110° with respect to the vertical direction. In fig. 1 a luffing direction LD1 of about 110° is shown, as well as a luffing direction LD2 of about 20° (with respect to the vertical). In figs. 5a-5c the top of the gantry structure or luffing frame structure 18c is shown in more detail. In addition to the luffing directions LD1 and LD2 a third luffing direction LD3 is shown.

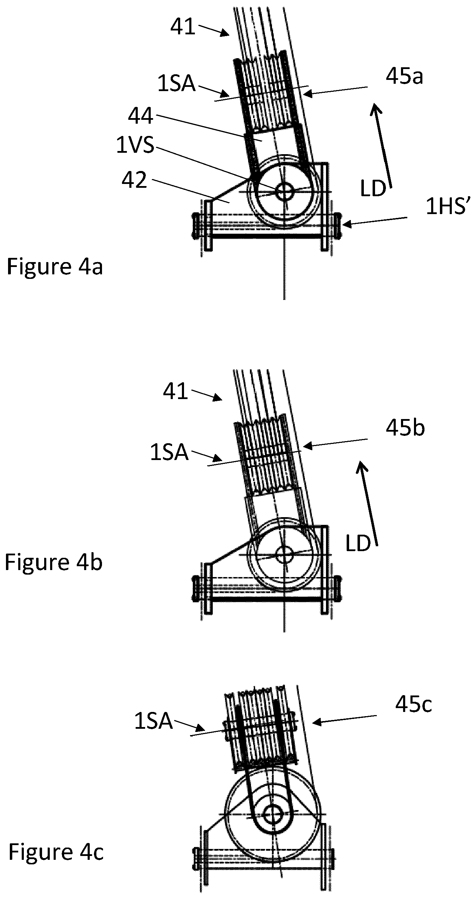

Exemplary configurations of luffing cable sheave sets 45a, 45b, 45c adapted to be mounted movable to the top of the luffing frame structure 18c are shown in figs. 4a-4c. Sheave set 45a has 9 sheaves to provide an 18 falls configuration, sheave set 45b has 11 sheaves to provide a 22 falls configuration, and sheave set 45c has 13 sheaves to provide a 26 falls configuration. The luffing cable sheave sets define a horizontal sheave rotation axis 1SA.

According to the present invention, the luffing cable sheave sets 45a, 45b, 45c are mounted movable to the top of the luffing frame structure 18c, allowing a vertical swivelling motion of the first luffing cable sheave sets about respective first swivel axes 1VS having a vertical component, preferably extending perpendicular to the luffing direction.

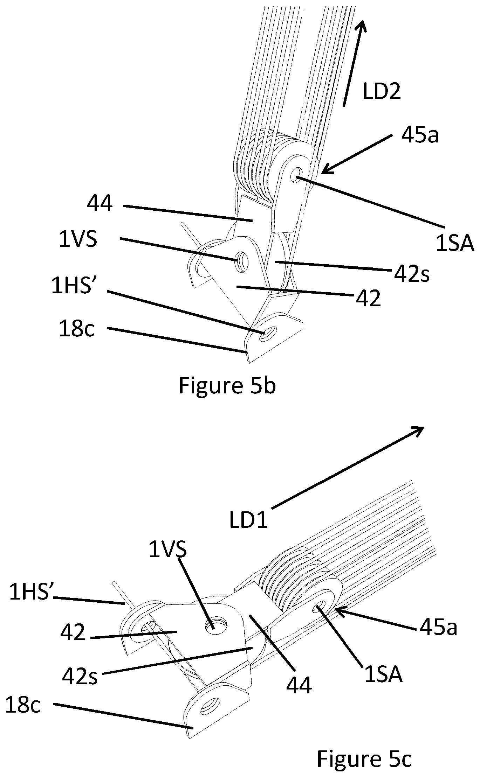

According to the shown preferred embodiment of the present invention, a further swivelling motion of the luffing cable sheave sets about a horizontal swivel axis is allowed. In figs. 4a-4c and figs. 5b, 5c the right-hand horizontal swivel axis 1HS' defined by the top of the luffing frame structure 18c is indicated. This is also the axis along which a luffing cable enters the first luffing cable sheave sets, see also the schematic routing in fig. 7, and in particular figs. 5b and 5c. In the shown configuration, the first horizontal swivel axis is 1HS' is parallel to the boom pivot axis 15 and at an angle with the horizontal sheave rotation axis 1SA.

In the shown embodiment, first right-hand bracket 42 is visible, which is allowed to swivel about the first right-hand horizontal swivel axis 1HS'. The first bracket 42 defines a first swivel axis 1VS having a vertical component, perpendicular to the first bracket 42 and perpendicular to the luffing direction LD. A guide sheave 42s is provided in the first bracket 42, having a sheave axis coinciding with the first swivel axis 1VS, adapted to guide the luffing wire to a second sheave set at a head structure of the boom.

A first right-hand sheave arm 44 comprising the first right-hand luffing cable sheave set 45a is supported by the first right-hand bracket 42, and allowed to swivel about the respective first swivel axis 1VS. The sheave arm 44 defines the sheave axis 1SA of the first right-hand luffing cable sheave set 45a.

In figs. 6a and 6b second left-hand and right-hand luffing cable sheave sets 47; 48 are shown, provided at opposite sides of the head structure 26. In this embodiment these second luffing cable sheave sets 47; 48 are mounted movable to the head structure. Here, similar to the first left-hand and right-hand luffing cable sheave sets 45; 46, a swivelling motion of the second luffing cable sheave sets about respective second swivel axes 2VS; 2VS' having a vertical component, preferably extending perpendicular to the luffing direction, is allowed. With a similar construction as that of the first left-hand and right-hand luffing cable sheave sets 45; 46, a swivelling motion of the second luffing cable sheave sets about a horizontal swivel axis 2HS is allowed.

Here, the top of the head structure 26 defines a second left-hand and right-hand horizontal swivel axis 2HS about which a second left-hand and right-hand bracket 49 is allowed to swivel up and down. Each bracket defines an second swivel axis 2VS; 2VS' perpendicular to the luffing direction LD. A second left-hand arm 43 comprising the second left-hand luffing cable sheave sets 47 and a second right-hand sheave arm comprising the second right-hand luffing cable sheave sets 48 are supported by the second left-hand and right-hand bracket 49, respectively, and are rotatable about the respective second swivel axes 2VS; 2VS'.

## Claims

1. Offshore leg encircling crane (10) for use on a jack-up vessel (1) comprising jack-up legs (2), for example for use in the handling of one or more offshore wind turbine components, e.g. for installation and/or maintenance of an offshore wind turbine, the leg encircling crane comprising:
• a base structure (11) adapted to be mounted to, or formed integral with, the vessel, and configured to extend about one of the jack-up legs;
• a revolving superstructure (12) comprising:
∘ a crane housing (13) configured to extend about the jack-up leg for allowing slew motion of the revolving superstructure relative to the base structure around a vertical slew axis (14) via a slew bearing, the crane housing comprising a boom connector defining a horizontal boom pivot axis (15);
∘ a luffing frame structure (18) onto the crane housing;
• a boom (20) having a longitudinal axis, wherein the boom has a head structure (26) on a distal portion (25) and a proximal end portion pivotally connected to the crane housing via the boom connector, so that the boom is pivotal up and down about the boom pivot axis (15) perpendicular to the longitudinal axis of the boom, between an essentially horizontal position of the boom and an upright position of the boom;
• a luffing device for pivoting the boom up to the upright position and down, comprising:
∘ a luffing winch (40) provided at the revolving superstructure;
∘ first left-hand and right-hand luffing cable sheave sets (45; 46) provided at opposite sides of the jack-up leg at a top of the luffing frame structure (18c);
∘ second left-hand and right-hand luffing cable sheave sets (47; 48) provided at opposite sides of the head structure (26); and
∘ a variable length luffing system (41) including a luffing cable; the variable length luffing system extending from the luffing winch via the first left-hand and right-hand luffing cable sheave sets to extend at opposite sides of the jack-up leg in a luffing direction (LD) to the second left-hand and right-hand luffing cable sheave sets;
• a hoisting system for hoisting a load, comprising a hoisting winch (50) provided at the revolving superstructure and an associated hoisting cable extending from the hoisting winch to a cable sheave assembly (51) at the head structure of the boom;
**characterized in that**
the first luffing cable sheave sets (45; 46) are mounted movable to the top of the luffing frame structure (18c), allowing a swivelling motion of the first luffing cable sheave sets about respective first swivel axes (1VS) having a vertical component, preferably extending perpendicular to the luffing direction (LD).

2. Offshore leg encircling crane according to claim 1, wherein the second luffing cable sheave sets (47; 48) are mounted movable to the head structure, allowing a swivelling motion of the second luffing cable sheave sets about respective second swivel axes (2VS; 2VS') having a vertical component, preferably extending perpendicular to the luffing direction.

3. Offshore leg encircling crane according to claim 1, wherein the first luffing cable sheave sets are mounted movable to the top of the luffing frame structure (18c), further allowing a horizontal swivelling motion of the first luffing cable sheave sets about a first essentially horizontal swivel axis (1HS), parallel to the boom pivot axis.

4. Offshore leg encircling crane according to claim 1, wherein the second luffing cable sheave sets (47; 48) are mounted movable to the head structure, further allowing a horizontal swivelling motion of the second luffing cable sheave sets about a second essentially horizontal swivel axis (2HS).

5. Offshore leg encircling crane according to claim 1 and 3, wherein the top of the luffing frame structure defines first left-hand and right-hand horizontal swivel axes (1HS) about which a first left-hand and right-hand bracket (42) is allowed to swivel up and down, and wherein each bracket defines a first swivel axis (1VS; 1VS') perpendicular to the luffing direction LD, and wherein a left-hand arm comprising the left-hand luffing cable sheave sets and a right-hand sheave arm (44) comprising the right-hand luffing cable sheave sets (45a; 45b; 45c) are supported by the first left-hand and right-hand bracket, respectively, and are rotatable about the respective first swivel axes (1VS; 1VS').

6. Offshore leg encircling crane according to any of the preceding claims, wherein the crane housing comprises a left-hand boom connector and a right-hand hand boom connector at a distance of each other, together defining a horizontal boom pivot axis (15); and wherein the distal portion of the boom is formed integral via a joint structure (24) with a right-hand boom leg (22) and a left-hand boom leg (23) of equal length, each of said boom legs having a proximal end portion pivotally connected to the crane housing via the left-hand boom connector and the right-hand boom hand connector, respectively.

7. Jack-up vessel (1) comprising jack-up legs, for example for use in the handling of one or more offshore wind turbine components, e.g. for installation and/or maintenance of an offshore wind turbine, wherein the vessel is provided with an offshore leg encircling crane according to any of claims 1-6.

8. Method for handling of one or more offshore wind turbine components, e.g. for installation and/or maintenance of an offshore wind turbine, wherein use is made of an offshore leg-encircling crane according to any of claims 1-6 or a jack-up vessel according to claim 7.

## Patentansprüche

1. Beinumkreisender Offshore-Kran (10) zur Verwendung auf einem Hubschiff (1) mit Hubbeinen (2), zum Beispiel zur Verwendung bei der Handhabung von einer oder mehreren Offshore-Windkraftanlagenkomponenten, z. B. für die Installation und/oder Wartung einer Offshore-Windkraftanlage, wobei der beinumkreisende Kran Folgendes umfasst:
• eine Sockelstruktur (11), die dazu eingerichtet ist, am Schiff montiert oder darin integriert zu sein, und dazu ausgelegt ist, sich um eines der Hubbeine zu erstrecken;
• einen sich drehenden Oberwagen (12), der Folgendes umfasst:
∘ ein Krangehäuse (13), das dazu ausgelegt ist, sich um das Hubbein zu erstrecken, um eine Schwenkbewegung des sich drehenden Oberwagens in Bezug zur Sockelstruktur um eine vertikale Schwenkachse (14) über ein Schwenklager zuzulassen, wobei das Krangehäuse einen Auslegerverbinder umfasst, der eine horizontale Auslegerschwenkachse (15) definiert;
∘ eine Wipprahmenstruktur (18) am Krangehäuse;
• einen Ausleger (20) mit einer Längsachse, wobei der Ausleger eine Kopfstruktur (26) an einem distalen Abschnitt (25) und einen proximalen Endabschnitt, der über den Auslegerverbinder mit dem Krangehäuse schwenkbar verbunden ist, aufweist, sodass der Ausleger um die Auslegerschwenkachse (15) senkrecht zur Längsachse des Auslegers zwischen einer im Wesentlichen horizontalen Position des Auslegers und einer aufrechten Position des Auslegers auf- und abwärts schwenkbar ist;
• eine Wippvorrichtung zum Schwenken des Auslegers in die aufrechte Position und hinab, Folgendes umfassend:
∘ ein Einziehwerk (40), das am sich drehenden Oberwagen vorgesehen ist;
∘ einen ersten linksseitigen und rechtsseitigen Wippseilrollensatz (45; 46), die an gegenüberliegenden Seiten des Hubbeins an der Oberseite der Wipprahmenstruktur (18c) vorgesehen sind;
∘ einen zweiten linksseitigen und rechtsseitigen Wippseilrollensatz (47; 48), die an gegenüberliegenden Seiten der Kopfstruktur (26) vorgesehen sind;
∘ ein Wippsystem (41) mit variabler Länge, einschließlich ein Wippseil; wobei sich das Wippsystem mit variabler Länge über den ersten linksseitigen und rechtsseitigen Wippseilrollensatz vom Einziehwerk erstreckt, um sich auf gegenüberliegenden Seiten des Hubbeins in eine Wipprichtung (LD) zum zweiten linksseitigen und rechtsseitigen Wippseilrollensatz zu erstrecken;
• ein Hubsystem zum Heben einer Last, umfassend eine Seilwinde (50), die am sich drehenden Oberwagen vorgesehen ist, und ein zugehöriges Hubseil, das sich von der Seilwinde zu einer Seilrollenbaugruppe (51) an der Kopfstruktur des Auslegers erstreckt;
**dadurch gekennzeichnet, dass**
die ersten Wippseilrollensätze (45; 46) beweglich an der Oberseite der Wipprahmenstruktur (18c) montiert sind, wodurch eine Schwenkbewegung der ersten Wippseilrollensätze um jeweilige Schwenkachsen (1VS) mit einer vertikalen Komponente, die sich vorzugsweise senkrecht zur Wipprichtung (LD) erstrecken, zugelassen wird.

2. Beinumkreisender Offshore-Kran nach Anspruch 1, wobei die zweiten Wippseilrollensätze (47; 48) beweglich an der Kopfstruktur montiert sind, wodurch eine Schwenkbewegung der zweiten Wippseilrollensätze um jeweilige Schwenkachsen (2VS; 2VS') mit einer vertikalen Komponente, die sich vorzugsweise senkrecht zur Wipprichtung erstrecken, zugelassen wird.

3. Beinumkreisender Offshore-Kran nach Anspruch 1, wobei die ersten Wippseilrollensätze beweglich an der Oberseite der Wipprahmenstruktur (18c) montiert sind, wodurch ferner eine horizontale Schwenkbewegung der ersten Wippseilrollensätze um eine erste im Wesentlichen horizontale Schwenkachse (1HS) parallel zur Auslegerschwenkachse zugelassen wird.

4. Beinumkreisender Offshore-Kran nach Anspruch 1, wobei die zweiten Wippseilrollensätze (47; 48) beweglich an der Kopfstruktur montiert sind, wodurch ferner eine horizontale Schwenkbewegung der zweiten Wippseilrollensätze um eine zweite im Wesentlichen horizontale Schwenkachse (2HS) zugelassen wird.

5. Beinumkreisender Offshore-Kran nach Anspruch 1 und 3, wobei die Oberseite der Wipprahmenstruktur eine erste linksseitige und rechtsseitige horizontale Schwenkachse (1HS) definiert, um welche eine erste linksseitige und rechtsseitige Konsole (42) auf- und abwärts schwenkbar ist; und wobei jede Konsole eine erste Schwenkachse (1VS; 1VS') senkrecht zur Wipprichtung LD definiert und wobei ein linksseitiger Arm mit den linksseitigen Wippseilrollensätzen und ein rechtsseitiger Rollenarm (44) mit den rechtsseitigen Wippseilrollensätzen (45a; 45b; 45c) von der ersten linksseitigen bzw. rechtsseitigen Konsole getragen werden und um die jeweilige erste Schwenkachse (1VS; 1VS') drehbar sind.

6. Beinumkreisender Offshore-Kran nach einem der vorstehenden Ansprüche, wobei das Krangehäuse einen linksseitigen Auslegerverbinder und einen rechtsseitigen Auslegerverbinder, die voneinander beabstandet sind, umfasst, die zusammen eine horizontale Auslegerschwenkachse (15) definieren; und wobei der distale Abschnitt des Auslegers über eine Verbindungsstruktur (24) mit einem rechtsseitigen Auslegerschenkel (22) und einem linksseitigen Auslegerschenkel (23) gleicher Länge einstückig ausgebildet ist, wobei jeder der Auslegerschenkel einen proximalen Endabschnitt aufweist, die über den linksseitigen Auslegerverbinder bzw. den rechtsseitigen Auslegerverbinder schwenkbar mit dem Krangehäuse verbunden sind.

7. Hubschiff (1) mit Hubbeinen, zum Beispiel zur Verwendung bei der Handhabung von einer oder mehreren Offshore-Windkraftanlagenkomponenten, z. B. für die Installation und/oder Wartung einer Offshore-Windkraftanlage, wobei das Schiff mit einem beinumkreisenden Offshore-Kran nach einem der Ansprüche 1-6 versehen ist.

8. Verfahren zum Handhaben einer oder mehrerer Offshore-Windkraftanlagenkomponenten, z. B. für die Installation und/oder Wartung einer Offshore-Windkraftanlage, wobei ein beinumkreisender Offshore-Kran nach einem der Ansprüche 1-6 oder ein Hubschiff nach Anspruch 7 zum Einsatz kommt.

## Revendications

1. Grue d'encerclement d'un pied en mer (10) destinée à être utilisée sur un navire auto-élévateur (1) comprenant des pieds auto-élévateurs (2), par exemple pour la manipulation d'un ou de plusieurs éléments d'éolienne en mer, par exemple pour l'installation et/ou la maintenance d'une éolienne en mer, la grue d'encerclement de pied comprenant :
• une structure de base (11) conçue pour être montée sur le navire, ou formée d'un seul tenant avec celui-ci, et conçue pour s'étendre autour de l'un des pieds auto-élévateurs ;
• une superstructure tournante (12) comprenant :
∘ un carter de grue (13) conçu pour s'étendre autour du pied auto-élévateur pour permettre un mouvement d'orientation de la superstructure tournante par rapport à la structure de base autour d'un axe d'orientation vertical (14) par l'intermédiaire d'un palier d'orientation, le carter de grue comprenant un raccord de flèche définissant un axe de pivotement de flèche horizontal (15) ;
∘ une structure de cadre de relevage (18) sur le carter de grue ;
• une flèche (20) ayant un axe longitudinal, la flèche ayant une structure de tête (26) sur une partie distale (25) et une partie d'extrémité proximale reliée de manière pivotante au carter de grue par l'intermédiaire du raccord de flèche, de sorte que la flèche pivote vers le haut et vers le bas autour de l'axe de pivot de flèche (15) perpendiculaire à l'axe longitudinal de la flèche, entre une position essentiellement horizontale de la flèche et une position verticale de la flèche ;
• un dispositif de relevage pour faire pivoter la flèche vers le haut jusqu'à la position verticale et vers le bas comprenant :
∘ un treuil de relevage (40) situé au niveau de la superstructure tournante ;
∘ des premiers ensembles de réas à câble de relevage gauche et droit (45 ; 46) situés sur des côtés opposés du pied auto-élévateur au sommet de la structure de cadre de relevage (18c) ;
∘ des seconds ensembles de réas à câble de relevage gauche et droit (47 ; 48) situés sur des côtés opposés de la structure de tête (26) ; et
∘ un système de relevage de longueur variable (41) comprenant un câble de relevage ; le système de relevage de longueur variable s'étendant du treuil de relevage par l'intermédiaire des premiers ensembles de réas à câble de relevage gauche et droit pour s'étendre sur les côtés opposés du pied auto-élévateur dans une direction de relevage (LD) vers les seconds ensembles de réas à câble de relevage gauche et droit ;
• un système de levage pour lever une charge comprenant un treuil de levage (50) situé au niveau de la superstructure tournante et un câble de levage associé s'étendant depuis le treuil de levage jusqu'à un ensemble réa à câble (51) au niveau de la structure de tête de la flèche ;
**caractérisée en ce que**
les premiers ensembles de réas à câble de relevage (45 ; 46) sont montés mobiles au sommet de la structure de cadre de relevage (18c), ce qui permet un mouvement de pivotement des premiers ensembles de réas à câble de relevage autour de premiers axes de pivotement (1VS) respectifs ayant un élément vertical, de préférence s'étendant perpendiculairement à la direction de relevage (LD).

2. Grue d'encerclement de pied en mer selon la revendication 1, les seconds ensembles de réas à câble de relevage (47 ; 48) étant montés mobiles sur la structure de tête, permettant un mouvement de pivotement des seconds ensembles de réas à câble de relevage autour de seconds axes de pivotement (2VS ; 2VS') respectifs ayant un élément vertical, s'étendant de préférence perpendiculairement à la direction de relevage.

3. Grue d'encerclement de pied en mer selon la revendication 1, les premiers ensembles de réas à câble de relevage étant montés mobiles sur le sommet de la structure de cadre de relevage (18c), permettant en outre un mouvement de pivotement horizontal des premiers ensembles de réas à câble de relevage autour d'un premier axe de pivotement essentiellement horizontal (1HS), parallèle à l'axe de pivotement de la flèche.

4. Grue d'encerclement de pied en mer selon la revendication 1, les seconds ensembles de réas à câble de relevage (47 ; 48) étant montés mobiles sur la structure de tête, permettant en outre un mouvement de pivotement horizontal des seconds ensembles de réas à câble de relevage autour d'un second axe de pivotement essentiellement horizontal (2HS).

5. Grue d'encerclement de pied en mer selon les revendications 1 et 3, le sommet de la structure de cadre de relevage définissant des premiers axes de pivotement horizontaux gauche et droit (1HS) autour desquels un premier support gauche et droit (42) peut pivoter vers le haut et vers le bas, et chaque support définissant un premier axe de pivotement (1VS; 1VS') perpendiculaire à la direction de relevage LD, et un bras gauche comprenant les ensembles de réas à câble de relevage gauche et un bras de réa droit (44) comprenant les ensembles de réas à câble de relevage droit (45a ; 45b ; 45c) étant supportés respectivement par les premiers supports gauche et droit, et pouvant tourner autour des premiers axes de pivotement (1VS ; 1VS') respectifs.

6. Grue d'encerclement de pied en mer selon l'une quelconque des revendications précédentes, le carter de grue comprenant un raccord de flèche gauche et un raccord de flèche droit à distance l'un de l'autre, définissant ensemble un axe de pivotement de flèche horizontal (15) ; et la partie distale de la flèche étant formée d'une seule pièce par l'intermédiaire d'une structure de jonction (24) avec un pied de flèche droit (22) et un pied de flèche gauche (23) de longueur égale, chacun desdits pieds de flèche ayant une partie d'extrémité proximale reliée pivotante au carter de grue par l'intermédiaire du raccord de flèche gauche et du raccord de flèche droite, respectivement.

7. Navire auto-élévateur (1) comprenant des pieds auto-élévateurs, par exemple pour la manipulation d'un ou de plusieurs éléments d'éolienne en mer, par exemple pour l'installation et/ou la maintenance d'une éolienne en mer, le navire étant pourvu d'une grue d'encerclement de pied en mer selon l'une quelconque des revendications 1 à 6.

8. Procédé de manipulation d'un ou de plusieurs éléments d'éolienne en mer, par exemple pour l'installation et/ou la maintenance d'une éolienne en mer, utilisation étant faite d'une grue d'encerclement de pied en mer selon l'une quelconque des revendications 1 à 6 ou d'un navire auto-élévateur selon la revendication 7.
